# EUROPÄISCHE PATENTSCHRIFT

(11) **EP 1 279 905 B1**
(45) Veröffentlichungstag und Bekanntmachung des Hinweises auf die Patenterteilung: **16.11.2005**
(21) Anmeldenummer: 02450150.4
(22) Anmeldetag: 04.07.2002
(51) Int. Cl.: F24J 2/26

(54) **Sonnenkollektoren mit Absorberrohren**
Solar collector with absorber tubes
Collecteur solaire avec tubes absorbeurs

(30) Priorität: 26.07.2001 AT 5902001 U
(43) Veröffentlichungstag der Anmeldung: 29.01.2003
(73) Patentinhaber: Green One Tec Solar-Industrie GmbH, 9300 St. Veit (AT)
(72) Erfinder: Kanduth, Robert, 9020 Klagenfurt (AT)
(74) Vertreter: Babeluk, Michael

(56) Entgegenhaltungen:
- CH-A- 581 812
- DE-U- 20 112 259
- FR-A- 2 319 283
- FR-A- 2 349 804
- FR-A- 2 480 917
- US-A- 4 078 548
- US-A- 4 326 583
- US-A- 4 426 998

## Beschreibung

Die vorliegende Erfindung betrifft einen Sonnenkollektor mit Absorberrohren, die von einem Wärmeträgermedium durchströmt sind und mit mindestens einem einstückigen Absorberblech zur Aufnahme der Sonnenenergie, das mit den Absorberrohren verbunden ist und diese überdeckt. Einen solchen Sonnenkollektor offenbart die US-A-4 426 998.
Sonnenkollektoren, die zur Erwärmung eines im Allgemeinen flüssigen Wärmeträgermediums dienen, bestehen üblicherweise aus einem Gehäuse, in dem eine Vielzahl von Absorberrohren angeordnet ist, die parallel zueinander in gleichmäßigen Abständen angeordnet sind. Um den Wirkungsgrad zu erhöhen und die Gesamtheit der einfallenden Sonnenstrahlen auszunützen, stehen die Absorberrohre in der Regel mit Absorberblechen in Verbindung, die die exponierte Oberfläche vergrößern, zunächst die Wärme aufnehmen und im Wege der Wärmeleitung an die Absorberrohre und damit an das Wärmeträgermedium weitergeben.

Bei bekannten Sonnenkollektoren sind die Absorberbleche glatt ausgebildet, was eine wärmetechnisch durchaus akzeptable und funktionelle Lösung ergibt, insbesondere dann, wenn die Absorberbleche lediglich in der Art von Finnen seitlich von Absorberrohren vorstehen. Es hat sich jedoch gezeigt, dass es bei großflächigeren Absorberblechen durch die relativ großen Temperaturunterschiede innerhalb des Systems und zu unterschiedlichen Zeitpunkten zur Verformung solcher Absorberbleche kommen kann, wodurch sich das optische Erscheinungsbild des Sonnenkollektors unvorteilhaft verändert. Zusätzlich dazu besteht das Problem, dass sich der Abstand zwischen dem Absorberblech und dem Gehäuse des Kollektors bzw. zu der Glasabdeckung des Kollektors durch diese Verwerfungen so stark verändert, dass es zu einer unerwünschten Wärmeübertragung kommt, die den Wirkungsgrad beeinträchtigt.

Aufgabe der vorliegenden Erfindung ist es, diese Nachteile zu vermeiden und einen Sonnenkollektor zu schaffen, der auch unter extremen Bedingungen einen optimalen Wirkungsgrad und ein gefälliges Erscheinungsbild aufweist.

Erfindungsgemäß werden diese Aufgaben dadurch gelöst, dass das Absorberblech im Wesentlichen vollflächig profiliert ausgebildet ist.

Wesentlich an der vorliegenden Erfindung ist, dass durch die Profilierung des Absorberblechs auch bei vergleichsweise geringer Materialstärke von beispielsweise 0,2 mm eine erhöhte Steifigkeit erzielt wird und dass der Wirkungsgrad des Sonnenkollektors nicht durch zusätzliche Abstützungen oder dergleichen beeinträchtigt wird.

Besonders günstig ist es in diesem Zusammenhang, wenn das Absorberblech aus Kupfer oder Aluminium hergestellt ist und eine selektive Oberflächenbeschichtung aufweist. Die selektive Oberflächenbeschichtung hat dabei die Aufgabe, die einfallende Strahlungsenergie praktisch vollständig in Wärmeenergie umzusetzen, jedoch andererseits selbst möglichst wenig Leistung abzustrahlen.

Besonders günstig hat es sich in der Praxis herausgestellt, wenn die Profilierung des Absorberblechs im Querschnitt im Wesentlichen wellig, faltenförmig oder sägezahnförmig ausgebildet ist. Wenn dabei die Profilierung des Absorberblechs parallel zu den Absorberrohren ist, kann eine erhöhte Kontaktfläche zwischen dem Absorberblech und den Absorberrohren erreicht werden, indem die Absorberrohre in einer Mulde des Absorberblechs aufgenommen werden. Alternativ dazu ist es jedoch auch möglich, dass die Absorberrohre in einen bevorzugt rechten Winkel zu der Profilierung des Absorberblechs angeordnet sind. Auf diese Weise wird eine besonders verwindungssteife Ausführung erreicht, da die Rohre eine Versteifung in einer Richtung und die Profilierung in eine Versteifung in einer anderen Richtung ergeben. Bei dieser Ausführungsvariante muss jedoch durch eine entsprechend sorgfältige Verlötung oder Verschweißung ein entsprechender Wärmeübergang zwischen den Absorberrohren und dem Absorberblech sichergestellt werden.

In einer weiteren bevorzugten Ausführungsvariante der Erfindung ist vorgesehen, dass die Profilierung aus bienenwabenförmigen Vertiefungen, kreisförmigen Eindrücken, Waffelmustern oder anderen Einprägungen besteht. Auf diese Weise kann eine in allen Richtungen steife Konstruktion des Absorberblechs günstig mit den Absorberrohren verbunden werden.

Weiters betrifft die Erfindung ein Verfahren zur Herstellung eines Absorberblechs für einen Sonnenkollektor der oben beschriebenen Art. In einer ersten Ausführungsvariante ist vorgesehen, dass das Absorberblech zunächst durch Walzen, Prägen oder Stanzen im Wesentlichen vollflächig profiliert wird und daran anschließend selektiv beschichtet wird. Bei diese Ausführungsvariante ist sichergestellt, dass auch empfindliche Beschichtungen nicht durch die Formgebung des Absorberblechs beschädigt werden.

Alternativ ist es jedoch auch möglich, dass das Absorberblech zunächst selektiv beschichtet wird und daran anschließend durch Walzen, Prägen oder Stanzen im Wesentlichen vollflächig profiliert wird. Bei dieser Ausführungsvariante kann der Beschichtungsvorgang des Absorberblechs in einfacher Weise am Klappenblech erfolgen, was den apparativen Aufwand entsprechend senkt.

In der Folge wird die Erfindung anhand der in den Figuren dargestellten Ausführungsvarianten näher erläutert. Es zeigen
- Fig. 1: eine teilweise Draufsicht auf einen erfindungsgemäßen Sonnenkollektor,
- Fig. 2: einen Schnitt nach Linie II - II in Fig. 1 und
- Fig. 3: einen Schnitt nach Linie III - III in Fig. 1.

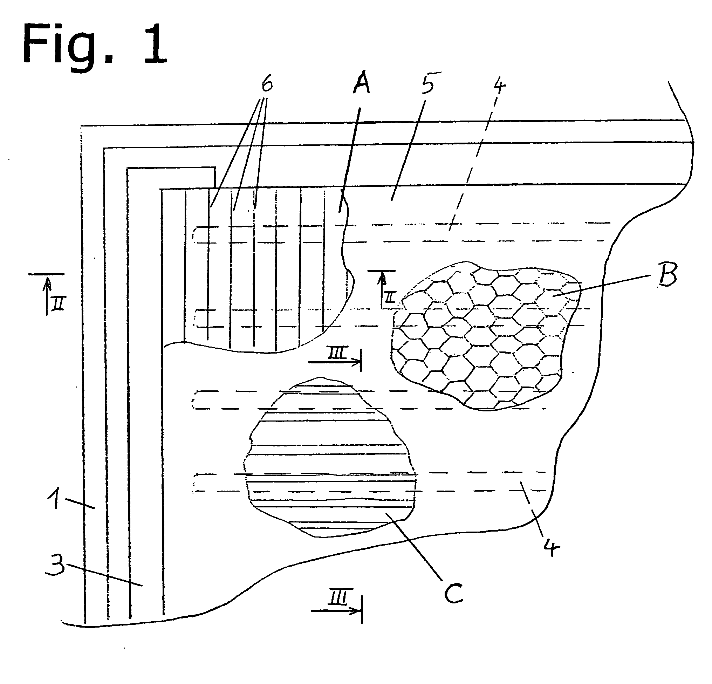

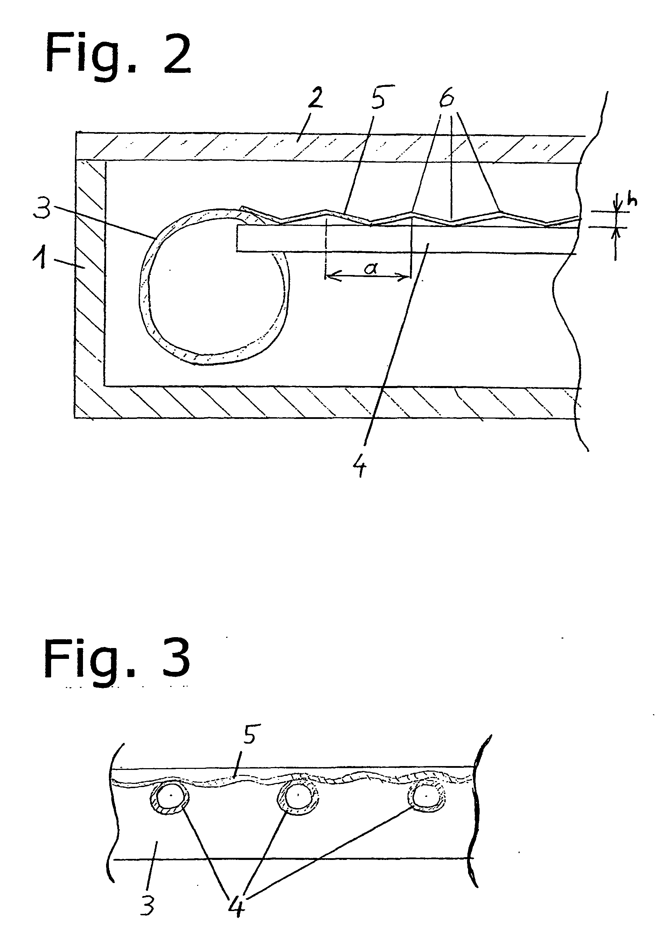

Der Sonnenkollektor von Fig. 1 besteht aus einem Gehäuse 1 mit einer transparenten Abdeckung 2. In dem Gehäuse 1 ist ein Sammelrohr 3 angeordnet, das mit einer Vielzahl zueinander parallelen Absorberrohren 4 in Verbindung steht und diese mit einem Wärmeträgermedium versorgt. Ein Absorberblech 5 überdeckt die Absorberrohre 4 vollständig, um eine optimale Ausnützung der eingestrahlten Energie zu gewährleisten. In Fig. 1 sind in den Ausschnitten A, B und C verschiedene Ausführungsvarianten für die Profilierung des Absorberblechs 5 dargestellt. In dem Ausschnitt A, der auch in Fig. 2 näher gezeigt ist, ist die Profilierung faltenförmig ausgebildet, wobei die Richtung der Falten 6 in einem rechten Winkel zur Richtung der Absorberrohre 4 ist.

Bei der Ausführungsvariante von Fig. 3 ist die Profilierung des Absorberblechs 5 wellig und parallel zur Richtung der Absorberrohre 4 ausgerichtet. Dies ist auch in dem Ausschnitt C in Fig. 1 entsprechend dargestellt.

Der Ausschnitt B zeigt ein bienenwabenförmig profiliertes Absorberblech 5.

Die Profilhöhe h der Profilierung des Absorberblechs 5 beträgt vorzugsweise etwa 1 mm, und der Abstand a zwischen zwei benachbarten Profilbergen beträgt bevorzugt etwa 15 mm.

Durch die vorliegende Erfindung ist es möglich, auch bei extrem dünnen Absorberblechen eine Verformung zu verhindern und damit den Wirkungsgrad des Sonnenkollektors auch bei extremer Belastung im optimalen Bereich zu halten.

## Patentansprüche

1. Sonnenkollektor mit Absorberrohren (4), die von einem Wärmeträgermedium durchströmt sind und mit einem Absorber zur Aufnahme der Sonnenenergie, der als einstückig ausgeführtes Absorberblech (5) ausgebildet ist, das mit den Absorberrohren (4) verbunden ist und diese überdeckt, **dadurch gekennzeichnet, dass** das Absorberblech (5) vollflächig profiliert ist und die Absorberrohre (4) vollständig überdeckt.

2. Sonnenkollektor nach Anspruch 1, **dadurch gekennzeichnet, dass** das Absorberblech (5) aus Kupfer oder Aluminium hergestellt ist und eine selektive Oberflächenbeschichtung aufweist.

3. Sonnenkollektor nach einem der Ansprüche 1 oder 2, **dadurch gekennzeichnet, dass** die Profilierung des Absorberblechs (5) im Querschnitt im Wesentlichen wellig, faltenförmig oder sägezahnförmig ausgebildet ist.

4. Sonnenkollektor nach Anspruch 3, **dadurch gekennzeichnet, dass** die Absorberrohre (4) parallel zueinander angeordnet sind und dass die Orientierung der Profilierung des Absorberblechs (5) parallel zu den Absorberrohren (4) ist.

5. Sonnenkollektor nach Anspruch 3, **dadurch gekennzeichnet, dass** die Absorberrohre (4) parallel zueinander angeordnet sind und dass die Orientierung der Profilierung des Absorberblechs (5) in einem Winkel, vorzugsweise einem rechten Winkel zu den Absorberrohren (4) angeordnet ist.

6. Sonnenkollektor nach einem der Ansprüche 1 oder 2, **dadurch gekennzeichnet, dass** die Profilierung aus bienenwabenförmigen Vertiefungen, kreisförmigen Eindrücken, Waffelmustern oder anderen Einprägungen besteht.

7. Sonnenkollektor nach einem der Ansprüche 1 bis 6, **dadurch gekennzeichnet, dass** die Profilhöhe (h) der Profilierung in einem Bereich von 0,25 mm bis 2,5 mm, vorzugsweise in einem Bereich von 0,4 mm bis 1 mm liegt und dass der Abstand (a) zwischen zwei benachbarten Profilbergen zwischen 2 mm und 25 mm bevorzugt bei etwa 15 mm liegt.

8. Verfahren zur Herstellung eines Absorberblechs (5) für einen Sonnenkollektor nach einem der Ansprüche 1 bis 7, **dadurch gekennzeichnet, dass** das Absorberblech (5) zunächst durch Walzen, Prägen oder Stanzen im Wesentlichen vollflächig profiliert wird und daran anschließend selektiv beschichtet wird.

9. Verfahren zur Herstellung eines Absorberblechs (5) für einen Sonnenkollektor nach einem der Ansprüche 1 bis 7, **dadurch gekennzeichnet, dass** das Absorberblech (5) zunächst selektiv beschichtet wird und daran anschließend durch Walzen, Prägen oder Stanzen im Wesentlichen vollflächig profiliert wird.

## Claims

1. A solar collector, comprising absorber tubes (4) which are flowed through by a heat transfer medium and an absorber for receiving the solar energy, which absorber is configured as an integral absorber plate (5) which is connected with absorber tubes (4) and covers the same, **characterized in that** the absorber plate (5) is profiled over the entire surface and covers the absorber tubes (4) completely.

2. A solar collector according to claim 1, **characterized in that** the absorber plate (5) is made of copper or aluminum and comprises a selective surface coating:

3. A solar collector according to one of the claims 1 or 2, **characterized in that** the profiling of the absorber plate (5) is provided in its cross section substantially with a waved, creased or saw-tooth-like configuration.

4. A solar collector according to claim 3, **characterized in that** the absorber tubes (4) are arranged parallel with respect to each other and that the orientation of the profiling of the absorber plate (5) is parallel to the absorber tubes (4).

5. A solar collector according to claim 3, **characterized in that** the absorber tubes (4) are arranged parallel with respect to one another and that the orientation of the profiling of the absorber plate (5) is arranged at an angle, preferably a right angle, relative to the absorber tubes (4).

6. A solar collector according to one of the claims 1 or 2, **characterized in that** the profiling consists of honeycomb-like recesses, circular indentations, waffle-type patterns, or other impressions.

7. A solar collector according to one of the claims 1 to 6, **characterized in that** the profile height (h) of the profiling lies in a range of 0.25 mm to 2.5 mm, preferably in a range of 0.4 mm to 1 mm, and that the distance (a) between two adjacent profile hills is between 2 mm and 25 mm, preferably approx. 15 mm.

8. A method for producing an absorber plate (5) for a solar collector according to one of the claims 1 to 7, **characterized in that** the absorber plate (5) is profiled at first essentially over its entire surface by rolling, stamping or punching and is then selectively coated.

9. A method for producing an absorber plate (5) for a solar collector according to one of the claims 1 to 7, **characterized in that** the absorber plate (5) is coated at first selectively and is then profiled essentially over its entire surface by rolling, stamping or punching.

## Revendications

1. Collecteur solaire comportant des tubes absorbants (4) traversés par un fluide caloporteur et reliés à un absorbeur recevant l'énergie solaire, celui-ci est constitué sous la forme d'une tôle absorbante (5) en une seule pièce, reliée aux tubes absorbeurs (4) et couvrant ceux-ci,
**caractérisé en ce que**
la tôle absorbante (5) est profilée sur toute sa surface et couvre complètement les tubes absorbeurs (4).

2. Collecteur solaire selon la revendication 1,
**caractérisé en ce que**
la tôle absorbante (5) est fabriquée en cuivre ou en aluminium et présente un revêtement de surface, sélectif.

3. Collecteur solaire selon l'une des revendications 1 ou 2,
**caractérisé en ce que**
le profilage de la tôle absorbante (5) présente en section une forme essentiellement ondulée, pliée ou en dents de scie.

4. Collecteur solaire selon la revendication 3,
**caractérisé en ce que**
les tubes absorbants (4) sont parallèles les uns aux autres et l'orientation du profilage de la tôle absorbante (5) est parallèle aux tubes absorbants (4).

5. Collecteur solaire selon la revendication 3,
**caractérisé en ce que**
les tubes absorbants (4) sont parallèles et l'orientation du profilage de la tôle absorbante (5) fait un angle, de préférence un angle droit par rapport aux tubes absorbants (4).

6. Collecteur solaire selon l'une des revendications 1 ou 2,
**caractérisé en ce que**
le profilage est formé de cavités en nids d'abeille, d'enfoncements circulaires, d'une structure gaufrée ou avec des empreintes.

7. Collecteur solaire selon l'une des revendications 1 à 6,
**caractérisé en ce que**
la hauteur (h) du profil se situe dans une zone comprise entre 0,25 mm et 2,5 mm, de préférence dans une zone de 0,4 mm jusqu'à 1 mm et la distance (a) entre deux sommets voisins du profil est comprise entre 2 mm et 25 mm et correspond de préférence à environ 15 mm.

8. Procédé de fabrication d'une tôle absorbante (5) pour un collecteur solaire selon l'une des revendications 1 à 7,
**caractérisé en ce que**
la tôle (5) est tout d'abord profilée pratiquement sur toute sa surface par laminage, emboutissage ou déformation et reçoit ensuite un revêtement sélectif.

9. Procédé de fabrication d'une tôle absorbante (5) pour un collecteur solaire selon l'une des revendications 1 à 7,
**caractérisé en ce qu'**
on revêt tout d'abord sélectivement la tôle absorbante (5) et ensuite on la profile pratiquement sur toute sa surface par laminage, emboutissage ou déformation.
